# EUROPEAN PATENT APPLICATION

(11) **EP 4 141 981 A1**
(43) Date of publication of application: **01.03.2023**
(21) Application number: 22182840.3
(22) Date of filing: 04.07.2022
(51) Int. Cl.: H01M 4/00

(54) **ANODE FOR SECONDARY BATTERY AND METHOD FOR MANUFACTURING ANODE FOR SECONDARY BATTERY**

(30) Priority: 31.08.2021 JP 2021141682
(71) Applicant: TOYOTA JIDOSHA KABUSHIKI KAISHA, Toyota-shi, Aichi-ken, 471-8571 (JP)
(72) Inventor: KATAYAMA, Yukihisa, Toyota-shi,, 471-8571 (JP); YABUZAKI, Takamasa, Toyota-shi,, 471-8571 (JP)
(74) Representative: J A Kemp LLP

(57) **Abstract**

An anode (1) for a secondary battery includes: a charge collector (11); and an anode composite layer (12) formed on the charge collector (11), and containing an active material (121) and an ion scavenger (122). The ion scavenger (122) contains a phosphate of zirconium, and has a cation exchange capability and an anion exchange capability.

## Description

### BACKGROUND

The present disclosure relates to an anode for a secondary battery and a method for manufacturing an anode for a secondary battery.

A secondary battery in which zinc is used as an active material of its anode has a problem that every time charging and discharging are repeated, the capacity of the secondary battery decreases due to diffusion of the zinc from the anode into an electrolyte.

Japanese Unexamined Patent Application Publication No. 2020-087516 discloses an anode for a zinc battery of which the decrease in the capacity due to repeated charging/discharge cycles is suppressed by coating the anode with a hydrotalcite layer.

### SUMMARY

Zinc in the anode of a zinc secondary battery is ionized during the charging/discharging process and diffuses into an electrolyte in the form of anions or cations.

The anode for a zinc battery disclosed in Japanese Unexamined Patent Application Publication No. 2020-087516 suppresses such diffusion of zinc because tetrahydroxyzincate ions (zinc in an anionic state) are trapped by the hydrotalcite layer. However, since the hydrotalcite layer cannot trap zinc in a cation state, the diffusion of zinc is not sufficiently suppressed, and hence the decrease in the battery capacity of the zinc secondary battery is not sufficiently suppressed.

The present disclosure has been made to solve such a problem, and an object thereof is to provide an anode for a secondary battery capable of suppressing a decrease in the battery capacity of a zinc secondary battery, and provide a method for manufacturing such an anode for a secondary battery.

A first exemplary aspect is an anode for a secondary battery including:
a charge collector; and
an anode composite layer formed on the charge collector, and containing zinc and a scavenger, in which
the scavenger contains a phosphate of zirconium, and has a cation exchange capability and an anion exchange capability.

By the above-described configuration, the anode for a secondary battery according to an aspect of the present disclosure is able to sufficiently trap both zinc in an anionic state and zinc in a cationic state, and has a corrosion resistance against the electrolyte, which is an alkaline aqueous solution, so that it is possible to suppress the decrease in the battery capacity of a zinc secondary battery.

The anode for a secondary battery according to an aspect of the present disclosure may contain the phosphate of zirconium in an amount of 0.5 to 10 mass% based on the whole anode composite layer.

The anode for a secondary battery according to an aspect of the present disclosure is particularly effective when it contains the phosphate of zirconium at the above-described ratio.

In the anode for a secondary battery according to an aspect of the present disclosure, the phosphate of zirconium may contain at least one of bismuth, aluminum, silicon, magnesium, calcium, titanium, and hafnium.

By the above-described configuration, the anode for a secondary battery according to an aspect of the present disclosure can make it possible to adjust its cation and anion exchange capabilities.

In the anode for a secondary battery according to an aspect of the present disclosure, the phosphate of zirconium may contain bismuth, and have the cation and anion exchange capabilities.

By the above-described configuration, the anode for a secondary battery according to an aspect of the present disclosure has the cation and anion exchange capabilities.

In the anode for a secondary battery according to an aspect of the present disclosure, the phosphate of zirconium may contain:
a first phosphate of zirconium containing at least one of aluminum and magnesium, and having the cation exchange capability; and
a second phosphate of zirconium containing at least one of silicon, calcium, and titanium, and having the anion exchange capability. By the above-described configuration, the anode for a secondary battery according to an aspect of the present disclosure has the cation and anion exchange capabilities.

Another exemplary aspect is a method for manufacturing an anode for a secondary battery, the anode for the secondary battery including: a charge collector; and an anode composite layer formed on the charge collector, and containing zinc and a scavenger,
the method including:
preparing an anode composite by dissolving zinc and a phosphate of zirconium in a solvent; and
applying the anode composite to the charge collector.

According to the present disclosure, it is possible to provide an anode for a secondary battery capable of suppressing a decrease in the battery capacity of a zinc secondary battery, and provide a method for manufacturing such an anode for a secondary battery.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic cross-sectional diagram showing a structure of an anode for a secondary battery according to a first embodiment;
Fig. 2A is a graph showing a result of a cycle test of a secondary battery;
Fig. 2B is a graph showing a result of a cycle test of a secondary battery;
Fig. 2C is a graph showing a result of a cycle test of a secondary battery;
Fig. 2D is a graph showing a result of a cycle test of a secondary battery;
Fig. 2E is a graph showing a result of a cycle test of a secondary battery; and
Fig. 2F is a graph showing a result of a cycle test of a secondary battery.

### DESCRIPTION OF EMBODIMENTS

### (First Embodiment)

### <Structure of Anode for Secondary Battery>

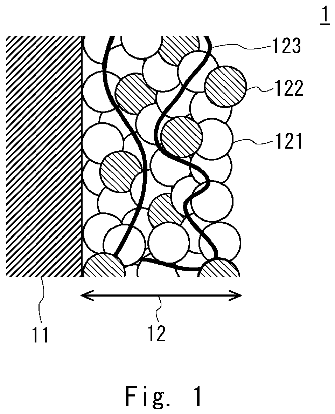

An embodiment according to the present disclosure will be described hereinafter with reference to the drawings. Fig. 1 is a schematic cross-sectional diagram of an anode for a secondary battery according to a first embodiment. The anode for a secondary battery according to the first embodiment is an anode that is used for a zinc secondary battery, and is used, for example, as an anode of a nickel-zinc secondary battery.

An anode 1 for a secondary battery according to the first embodiment includes a charge collector 11 and an anode composite layer 12.

The charge collector 11 is a terminal that exchanges electrons with the anode composite layer 12 (which will be described later). The charge collector 11 receives electrons from the anode composite layer 12 when the secondary battery is discharged, and provides electrons to the anode composite layer 12 when the secondary battery is charged.

The charge collector 11 is a metal foil or perforated metal made of a raw material which has electron conductivity, is stabilized in the battery, and is easily processed (e.g., machined). For example, the charge collector 11 is a metal foil or perforated metal made of iron, copper, tin, or an alloy thereof. Further, the surface of the charge collector 11 may be subjected to a plating treatment or a coating treatment in order to increase a corrosion resistance against an electrolyte. Further, the surface of the charge collector 11 may be subjected to an etching treatment.

The anode composite layer 12 is a film layer formed on the charge collector 11. The anode composite layer 12 provides electrons to the charge collector 11 when the secondary battery is discharged, and receives electrons from the charge collector 11 when the secondary battery is charged. The anode composite layer 12 contains an active material 121, an ion scavenger 122, and a binder 123.

The anode composite layer 12 is formed by applying an anode composite (slurry) that is obtained by dissolving the active material 121, the ion scavenger 122, and the binder 123 in a proper solvent, to the charge collector 11, and then drying the applied anode composite. After the anode composite is dried, the anode composite layer 12 is pressed and thereby made to adhere to the charge collector 11.

The active material 121 is particles containing zinc and zinc oxide as its main components, and reacts with the electrolyte in redox reactions. Specifically, the below-shown reactions proceed between the active material 121 and the electrolyte.
(During Charging)

   ZnO + H₂O + 2e⁻ --> Zn + 2OH⁻
(During Discharging)

   Zn + 2OH⁻ --> ZnO + H₂O + 2e⁻

Note that the electrolyte used in this example is an alkaline aqueous solution, such as a potassium hydroxide solution, or a potassium hydroxide solution to which sodium hydroxide, lithium hydroxide, an organic solvent, or the like is added.

The zinc contained in the active material 121 is diffused into the electrolyte. More specifically, the zinc is diffused into the electrolyte in the form of ions. The zinc exists as Zn(H₂O)₄²⁺, Zn(H₂O)₂(OH⁻)₂, Zn(H₂O)(OH⁻)₃¹⁻, and Zn(OH⁻)₄²⁻ in the electrolyte (the alkaline aqueous solution). That is, the zinc is diffused into the electrolyte both in a cationic (positive-ion) state and in an anionic (negative-ion) state.

The diffusion of zinc ions into the electrolyte is one of the causes of the decrease in the battery capacity. Further, the diffused zinc precipitates as a resinous crystal called dendrite, and thus could cause a short circuit.

The ion scavenger 122 traps zinc diffused in the electrolyte. That is, the ion scavenger 122 suppresses the diffusion of zinc into the electrolyte. The ion scavenger 122 according to this embodiment contains a phosphate(s) of zirconium, and has a cation exchange capability and an anion exchange capacity derived from the phosphate(s) of zirconium. Since the ion scavenger 122 has these cation and anion exchange capabilities, it can trap both zinc in a cationic state and zinc in an anionic state, and thereby can suppress the diffusion of zinc into the electrolyte.

Examples of phosphates of zirconium include, but is not limited to, zirconium hydrogen phosphate. That is, examples of phosphates of zirconium also include zirconium phosphate, zirconium dihydrogen phosphate, and mixtures thereof. That is, any salt having a composition "Zr(H_{X}P_{Y}O_{Z})" (where each of X, Y and Z is a real number greater than zero) may be used.

Further, the phosphate of zirconium may be crystalline or amorphous. Further, a salt having a layered or non-layered structure may be used. That is, the phosphate of zirconium that can be used as the ion scavenger 122 according to this embodiment is not limited according to the type of the solid structure.

The content of the phosphate of zirconium based on the whole anode composite layer is preferably 0.5 to 10 mass%, more preferably 1 to 5 mass%, and still more preferably 2 to 3 mass%.

Note that, in the specification of the present disclosure, when a numerical range is expressed as "~ to ~", the numerical values before and after "to" are included as the lower and upper limits, respectively.

The phosphate of zirconium may contain, as an additive(s), for example, bismuth, aluminum, silicon, magnesium, calcium, titanium, and/or hafnium. It is possible to adjust the cation and anion exchange capabilities of the phosphate of zirconium by these additives. The content of these additives based on the whole phosphate of zirconium is preferably from 0.01 to 99.9 mass%, and more preferably 1.0 to 50 mass%.

Note that the elements contained in the phosphate of zirconium are not limited to the aforementioned elements, and include any element having a sufficiently low hydrogen overvoltage, such as transition metals.

For example, a phosphate of zirconium containing bismuth has cation and anion exchange capabilities comparable to each other.

Further, a phosphate of zirconium containing aluminum or magnesium, or both of them has a high cation exchange capability compared to its anion exchange capability.

Further, a phosphate of zirconium containing at least one of silicon, calcium, and titanium has a high anion exchange capability compared to its cation exchange capability.

As the ion scavenger 122, a phosphate of zirconium having cation and anion exchange capabilities comparable to each other may be used.

Alternatively, a mixture of a phosphate of zirconium having a high cation exchange capability and a phosphate of zirconium having a high anion exchange capability may also be used.

Further, a mixture obtained by mixing a phosphate of zirconium having a high cation exchange capability or a phosphate of zirconium having a high anion exchange capability, or both of them with a phosphate of zirconium having cation and anion exchange capabilities comparable to each other may be used.

That is, the ion scavenger 122 may have any composition as long as it has both cation and anion exchange capabilities.

The phosphates of zirconium has a corrosion resistance against alkaline aqueous solutions. Therefore, the ion scavenger 122 traps zinc while hardly being corroded in the electrolyte, which is an alkaline aqueous solution, and also functions as a frame material for maintaining the shape of the anode composite layer.

The binder 123 is used to bind (e.g., bond) the anode composite layer 12 to the charge collector 11, and is, for example, a resin material. The binder 123 is typically styrene butadiene rubber (SBR) or carboxymethylcellulose (CMC).

As described above, by the above-described configuration, the anode for a secondary battery according to this embodiment can trap zinc diffused into the electrolyte irrespective of whether the zinc is in an anionic state or in a cationic state, and thereby can suppress the diffusion of zinc into the electrolyte. Further, the anode for a secondary battery according to this embodiment exhibits a corrosion resistance against alkaline aqueous solutions. As a result of the above-described facts, the anode for a secondary battery according to this embodiment can suppress the decrease in the battery capacity of a zinc secondary battery.

Note that, needless to say, the active material 121, the ion scavenger 122, and the binder 123, which are microscopic components in reality, are schematically shown in Fig. 1, and hence they do not faithfully represent the relationship among the actual sizes of these components, the shapes thereof, the content ratios among thereof, and the like.

### <Method for Manufacturing Anode for Secondary Battery>

A method for manufacturing an anode for a secondary battery according to this embodiment will be described hereinafter in detail.

Firstly, an anode composite is obtained by making an active material 121, an ion scavenger 122, and a binder 123 suspended in a proper solvent (e.g., water), and stirring them.

Next, the obtained anode composite is applied to the surface of a charge collector 11 and dried, so that an anode composite layer 12 is formed on the surface of the charge collector 11. Note that, in the step of applying the anode composite to the charge collector 11, the anode composite is not applied to the entire surface of the charge collector 11. That is, some area is not coated with the anode composite.

Next, the formed anode composite layer 12 is pressed by a press, and thereby is made to adhere to the charge collector 11.

Lastly, a metal terminal is welded to the area of the charge collector 11 to which the anode composite was not applied, and as a result, an anode for a secondary battery is completed.

### [Example]

Examples of the anode for a secondary battery according to the first embodiment, and comparative examples thereof will be described hereinafter in detail. However, the anode for a secondary battery according to the first embodiment is not limited to the below-shown examples.

### (Example 1)

In an Example 1, IXE-6107 manufactured by Toagosei Co., Ltd. was used as a phosphate of zirconium having cation and anion exchange capabilities.

A zinc oxide powder (which corresponds to the active material 121), a metallic zinc powder (corresponding to the active material 121), CMC (corresponding to the binder 123), an SBR dispersion solution (corresponding to the binder 123), and IXE-6107 (corresponding to the ion scavenger 122) were mixed at a mass ratio of 90/10/1/4/2.5. Further, a proper amount of water was added to the mixture as a solvent, and the mixture was further mixed (i.e., stirred) by using a spatula. This mixture was stirred at 1,500 rpm for 10 minutes by a planetary centrifugal mixer manufactured by Thinky Corporation, and as a result, an anode composite was obtained in the form of a white ink-like mixture.

The obtained anode composite was applied, at approximately 100 mg/cm², to a tin-plated perforated copper foil (having a thickness of 60 µm and an aperture rate of 40%) except for an area within 10 mm from the top thereof, and the applied anode composite was dried for one hour at 60 degrees Celsius. Next, the perforated copper foil coated with the anode composite was pressed in a roll press with a linear pressure of 1.0 ton. Lastly, an anode for a secondary battery was manufactured by resistance-welding a copper foil having a thickness of 120 µm to the area within 10 mm from the top of the pressed perforated copper foil.

Further, a secondary battery was manufactured by using the manufactured anode for a secondary battery.

A nickel porous electrode filled with nickel hydroxide containing cobalt, and welded to a cathode terminal was used as a cathode. That is, the secondary battery according to this example is a nickel-zinc secondary battery.

The anode for a secondary battery was used in a state in which it was enclosed with a hydrophilic PP (polypropylene) separator. Further, the cathode was used in a state in which it was enclosed with two layers of a hydrophilic PP separator and hydrophilic nonwoven fabric.

The cathode was sandwiched between two anodes for a secondary battery, fixed by a jig, and disposed inside a battery housing. Next, a proper amount of a 6 M (molar concentration) potassium hydroxide electrolyte in which zinc oxide was dissolved in a saturated state was dropped into the battery housing. Lastly, a secondary battery was manufactured by sealing the container (i.e., the housing) and leaving it undisturbed for a predetermined time.

### (Example 2)

An anode for a secondary battery was manufactured in a manner similar to the Example 1, except that IXE-6136 manufactured by Toagosei Co. was used as the phosphate of zirconium having cation and anion exchange capabilities.
Further, a secondary battery was manufactured by using the manufactured anode for a secondary battery in a manner similar to the Example 1.

### (Comparative Example 1)

An anode for a secondary battery was manufactured in a manner similar to the Example 1, except that no phosphate of zirconium was added. Further, a secondary battery was manufactured by using the manufactured anode for a secondary battery in a manner similar to the Example 1.

### (Comparative Example 2)

An anode for a secondary battery was manufactured in a manner similar to the Example 1, except that 2.5 mass% of hydrotalcite, instead of the phosphate of zirconium, was added as a material having an anion exchange capability. Further, a secondary battery was manufactured by using the manufactured anode for a secondary battery in a manner similar to the Example 1.

### (Comparative Example 3)

An anode for a secondary battery was manufactured in a manner similar to the Example 1, except that 2.5 mass% benzyltrimethylammonium hydroxide, instead of the phosphate of zirconium, was added as a material having an anion exchange capability. Further, a secondary battery was manufactured by using the manufactured anode for a secondary battery in a manner similar to the Example 1.

In the following description, benzyltrimethylammonium hydroxide is referred to as BTMAH (Benzyltrimethylammonium Hydroxide).

### <Comparison between Performances of Examples and those of Comparative Examples>

Results of cycle tests of the secondary batteries manufactured in the Examples 1 and 2 and the Comparative Examples 1 to 3 will be described hereinafter in detail with reference to graphs and tables. In Table 1, the charging/discharging conditions in the cycle tests are summarized.

**[Table 1]**

| Item | Detail |
|---|---|
| Charging | CC:3C 2.00V cut + CV:1.90V 16mA cut |
| REST | 5 min |
| Discharging | CC:3C 1.30V cut |
| REST | 5 min |

The charging in the cycle tests was CCCV (Constant Current Constant Voltage) charging. That is, after the secondary battery was charged at a current of 3 C until the voltage of the secondary battery reached 2.00 V, the voltage of the secondary battery was fixed at 1.90 V. Further, the secondary battery was charged until the current flowing into the secondary battery was reduced to 16 mA.

After the charging was completed, the secondary battery was left undisturbed (REST) for five minutes.

After being left undisturbed for five minutes, the secondary battery was started to be discharged. The secondary battery was discharged at a current of 3 C until the voltage of the secondary battery reached 1.30 V.

After the discharge was completed, the secondary battery was left undisturbed (REST) for five minutes again.

The above-described series of processes was defined as one cycle, and this cycle was repeated 500 times at maximum for each of the secondary batteries manufactured in the Examples 1 and 2 and the Comparative Examples 1 to 3.

Note that the unit C for the current used in the tests was a C rate. 1 C is defined as a magnitude of a constant current at which a given battery is completely discharged from its fully-charged state in one hour.

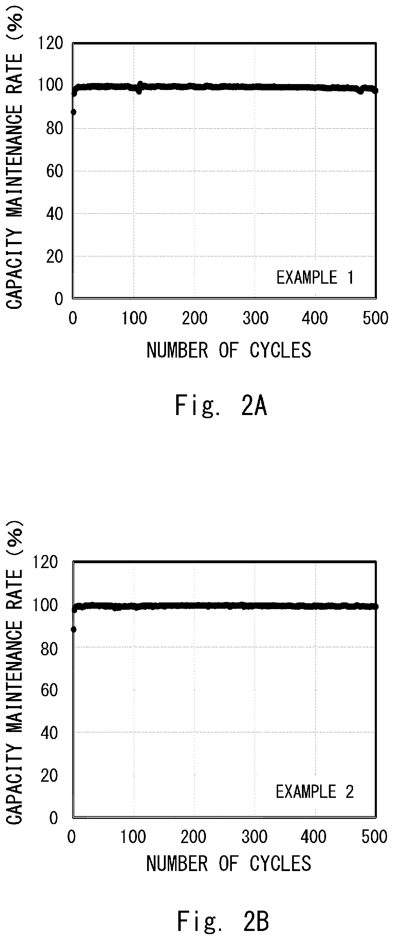

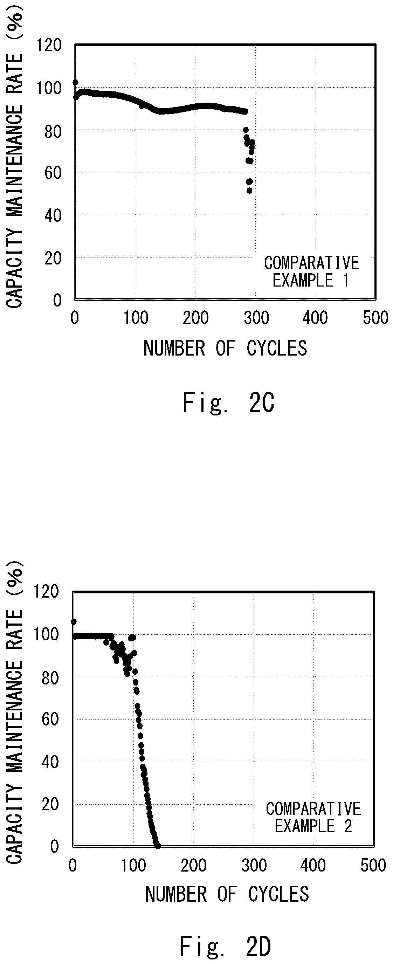

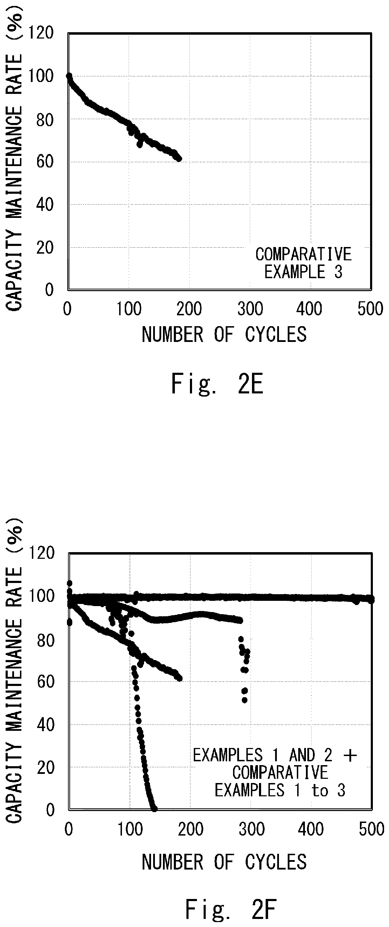

Each of Figs. 2a to 2F is a graph showing a result of a cycle test of a secondary battery. More specifically, each of the graphs shown in Figs. 2A to 2F is a graph in which the horizontal axis indicates the number of cycles and the vertical axis indicates the capacity maintenance rate of the secondary battery at the point of time at which the charging/discharging in each cycle was performed.
Figs. 2A to 2E show the results of the cycle tests of the secondary batteries manufactured in the Examples 1 and 2 and the Comparative Examples 1, 2 and 3, respectively. Further, Fig. 2F is a graph showing the results of the cycle tests of the secondary batteries manufactured in the Examples 1 and 2 and the Comparative Examples 1, 2 and 3 in a collective manner (i.e., in one graph).

When these graphs are compared with each other, it is seen that the capacity maintenance rates of the secondary batteries manufactured in the Examples 1 and 2 remained at values close to 100% even after the cycles of charging and discharging were repeated 500 times.

In contrast, in the Comparative Example 1 in which no ion scavenger was added, the Comparative Example 2 in which BTMAH was added the ion scavenger, and the Comparative Example 3 in which hydrotalcite was added as the ion scavenger, the capacity maintenance rates significantly decreased.

In Table 2, the results of the cycle tests are summarized. Note that the ion scavenger 1 in the table is IXE-6107, and the ion scavenger 2 was IXE-6136.

**[Table 2]**

| Item | Item changed from Comparative Example 1 | Number of cycles before short circuit | Capacity maintenance rate up to 500 cycles | Initial internal resistance ratio |
|---|---|---|---|---|
| Example 1 | 2.5 mass% of ion scavenger 1 is added | > 500 | 88.5% | 100% |
| Example 2 | 2.5 mass% of ion scavenger 2 is added | > 500 | 99.6% | 95% |
| Comparative Example 1 | ---- | 241 | ---- | 100% |
| Comparative Example 2 | 0.5 mass% of BTMAH is added | 124 | ---- | 141% |
| Comparative Example 3 | 2.5 mass% of hydrotalcite is added | ---- | ---- | 105% |

As described above, the capacity maintenance rates of the secondary batteries manufactured in the Examples 1 and 2 remained at values close to 100% even after the cycles of charging and discharging were repeated 500 times, and in particular, they were 88.5% and 99.6%, respectively.

Further, no short circuit occurred in the secondary batteries manufactured in the Examples 1 and 2 even after the cycles of charging and discharging were repeated 500 times. In contrast, short circuits occurred in the secondary batteries manufactured in the Comparative Examples 1 and 2 before the cycles of charging and discharging were repeated 500 times.

Further, the initial internal resistances of the secondary batteries manufactured in the Examples 1 and 2 were roughly equal to those in the Comparative Example 1, meaning that the internal resistances hardly increased even though the ion scavengers were added.

As described above, zinc secondary batteries manufactured by using the anodes for secondary batteries according to this embodiment, i.e., the zinc secondary batteries manufactured in the Examples 1 and 2, exhibited charging/discharging cycle characteristics that were distinctly superior to those in the Comparative Examples 1 to 3.

As described above, since an anode for a secondary battery according to this embodiment uses a phosphate of zirconium as an ion scavenger, which has cation and anion exchange capabilities and has a corrosion resistance against alkaline aqueous solutions, it can suppress the decrease in the battery capacity of a zinc secondary battery.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. An anode (1) for a secondary battery comprising:
a charge collector (11); and
an anode composite layer (12) formed on the charge collector (11), and containing zinc and a scavenger, wherein
the scavenger contains a phosphate of zirconium, and has a cation exchange capability and an anion exchange capability.

2. The anode (1) for a secondary battery according to Claim 1, wherein the scavenger contains the phosphate of zirconium in an amount of 0.5 to 10 mass% based on the whole anode composite layer (12).

3. The anode (1) for a secondary battery according to Claim 1 or 2, wherein the phosphate of zirconium contains at least one of bismuth, aluminum, silicon, magnesium, calcium, titanium, and hafnium.

4. The anode (1) for a secondary battery according to any one of Claims 1 to 3, wherein the phosphate of zirconium contains bismuth, and has the cation exchange capability and the anion exchange capability.

5. The anode (1) for a secondary battery according to any one of Claims 1 to 3, wherein the phosphate of zirconium contains:
a first phosphate of zirconium containing at least one of aluminum and magnesium, and having the cation exchange capability; and
a second phosphate of zirconium containing at least one of silicon, calcium, and titanium, and having the anion exchange capability.

6. A method for manufacturing an anode (1) for a secondary battery,
the anode (1) for the secondary battery comprising: a charge collector (11); and an anode composite layer (12) formed on the charge collector (11), and containing zinc and a scavenger,
the method comprising:
preparing an anode composite by dissolving zinc and a phosphate of zirconium in a solvent; and
applying the anode composite to the charge collector (11).
